# EUROPEAN PATENT APPLICATION

(11) **EP 1 734 766 A2**
(43) Date of publication of application: **20.12.2006**
(21) Application number: 06111745.3
(22) Date of filing: 27.03.2006
(51) Int. Cl.: H04N 7/24, H04N 13/00, H04N 7/58

(54) **Transport stream structure including image data and apparatus and method for transmitting and receiving image data**

(30) Priority: 14.06.2005 KR 2005051135
(71) Applicant: SAMSUNG ELECTRONICS CO., LTD., Suwon-si, Gyeonggi-do (KR)
(72) Inventor: Yu, Pil-ho, Suwon-si Gyeonggi-do (KR); Ha, Tae-hyeun, Suwon-si Gyeonggi-do (KR)
(74) Representative: Robinson, Ian Michael

(57) **Abstract**

An image transmitting apparatus and method and an image receiving apparatus and method, the image receiving apparatus including a decoder (510) receiving and decoding an image signal including image data and an image characteristic parameter (102) which contains information indicating whether the image data represents a two-dimensional (2D) image or a three-dimensional (3D) image, an image characteristic parameter detector (520) receiving the decoded image signal and extracting and interpreting the image characteristic parameter (102) from the decoded image signal, and a display unit (530) receiving the image characteristic parameter (102) from the image characteristic parameter detector (520) and displaying the image data received from the decoder (510) according to the image characteristic parameter (102), to display a 2D image and a 3D image in various fields, such as a 3D image broadcast, etc., that can be shown on a digital broadcast standard system.

## Description

The present invention relates to an apparatus and method for receiving and transmitting images, and a transport stream structure thereof.

Recently, studies on broadcasting three-dimensional (3D) images to be shown on digital televisions (DTVs) has been undertaken. A digital broadcast converts analog signals, such as video, audio, other data and so on, into digital signals, compresses and transmits the digital signals, and then receives the digital signals and converts and reproduces them into the original video, audio, and other data. The digital broadcast provides services with a high picture quality, compared with a conventional analog broadcast.

Also, studies on reception and displaying of 3D images using the digital broadcasting technologies as described above are currently underway. Conventional methods for reception and displaying of 3D images use binocular disparity. The methods for reception and displaying of 3D images using binocular disparity include a "stereoscopy" method using glasses, such as polarization glasses, LC shutter glasses, etc., to view 3D images, and an "autostereoscopy" method which allows naked eyes to see 3D images using an apparatus including a lenticular lens, a parallax barrier, parallax illumination, etc.

The stereoscopy method which displays images using a polarization projector has been mainly applied to public places, such as theaters. The autostereoscopy method has been applied to games, home TVs, displays for exhibition, etc.

Up to now, many studies have been concentrated on implementing 3D images using the autostereoscopy method, and various associated products have been sold. Most of 3D displays that have been introduced so far can implement only 3D images and are more expensive than 2D displays.

However, since 3D image contents are not actively supplied, expensive 3D image displays cannot be fully utilized and are not cost-effective.

Accordingly, studies on the development of a 2D/3D convertible display which selectively implements 2D images and 3D images are being currently performed, and various associated products are being introduced.

In order to broadcast 3D images similar to real images seen by the naked eye, multi-view 3D images have to be obtained and transmitted, then received and finally reproduced by a 3D display. However, since the multi-view 3D images include a large amount of data, it is difficult to transmit the multi-view 3D images through the bandwidths of channels used in existing digital broadcast systems. For this reason, studies on transmission and reception of stereo images are being performed. Regarding 3D image-related standards which are being developed by MPEG (Moving Picture Expert Groups), a MPEG-2 multi-view profile has been developed in 1996, and a standard related to compression of stereo images and multi-view images is nearly complete. Along with this, associated groups are actively performing studies on transmission and reception of 3D images through digital television broadcasts. Recently, studies on transmission and reception of High Definition (HD) stereo images have being actively performed. Meanwhile, in most fields including digital broadcast systems, simulations or medical analysis systems, etc., demands for implementation of 3D images as well as 2D images are increasing. However, since no standard has yet been developed for a transport stream structure for selectively implementing 2D images and 3D images, an apparatus and method for transmitting a transport stream, and an apparatus and method for receiving and displaying a transport stream, have to be researched further.

According to the present invention there is provided an apparatus and method as set forth in the appended claims. Preferred features of the invention will be apparent from the dependent claims, and the description which follows.

The present invention provides a transport stream structure including a header which contains an image characteristic parameter regarding a two-dimensional (2D)/three-dimensional (3D) image in a predetermined location of the header, an apparatus and method for transmitting the transport stream, and an apparatus and method for receiving and displaying the transport stream, in a digital broadcast system, etc.

According to an aspect of the present invention, there is provided a transport stream structure used for a digital broadcast system, comprising: a header comprising an image characteristic parameter which contains information indicating whether image data used in the digital broadcast system represents a two-dimensional (2D) image or a three-dimensional (3D) image; and a payload (120) comprising the image data.

According to another aspect of the present invention, there is provided an image transmitting apparatus comprising: a storage unit storing image data; an image characteristic parameter generator creating an image characteristic parameter indicating whether the stored image data represents a two-dimensional (2D) image or a three-dimensional (3D) image; and an encoder receiving the stored image data and the image characteristic parameter and encoding the stored image data and the image characteristic parameter so that the stored image data and the image characteristic parameter are included in a transport stream.

According to another aspect of the present invention, there is provided an image receiving apparatus comprising: a decoder receiving and decoding an image signal comprising image data and an image characteristic parameter which contains information indicating whether the image data represents a two-dimensional (2D) image or a three-dimensional (3D) image; an image characteristic parameter detector receiving the decoded image signal and detecting the image characteristic parameter; and a display unit displaying the image data received from the decoder according to the image characteristic parameter received from the image characteristic parameter detector.

According to another aspect of the present invention, there is provided a image transmitting method comprising: (a) receiving image data; (b) receiving an image characteristic parameter which contains information indicating whether the image data represents a two-dimensional (2D) image or a three-dimensional (3D) image; (c) encoding the image data and the image characteristic parameter so that the image data and the image characteristic parameter are included in a transport stream.

According to another aspect of the present invention, there is provided an image receiving method comprising: (a) receiving and decoding an image signal comprising image data and an image characteristic parameter which contains information indicating whether the image data represents a two-dimensional (2D) image or three-dimensional (3D) image; (b) receiving the decoded image signal and detecting the image characteristic parameter; (c) receiving the image characteristic parameter detected in operation (b); and (d) displaying the image data decoded in operation (a) according to the image characteristic parameter received in operation (c).

According to another aspect of the present invention, there is provided a computer-readable medium having embodied thereon a computer program for executing the image transmitting method.

According to another aspect of the present invention, there is provided a computer-readable medium having embodied thereon a computer program for executing the image receiving method.

The above and other features and advantages of the present invention will become more apparent by describing in detail exemplary, non-limiting embodiments thereof with reference to the attached drawings in which:
Figure 1 is a view of a transport stream structure according to a non-limiting embodiment of the present invention;
Figures 2A and 2B are views for explaining examples regarding the number of camera viewpoints for a three-dimensional (3D) image according to a non-limiting embodiment of the present invention;
Figures 3A through 3D are views illustrating examples of display formats for a 3D image according to a non-limiting embodiment of the present invention;
Figure 4 is a block diagram of an image transmitting apparatus according to a non-limiting embodiment of the present invention;
Figure 5 is a block diagram of an image receiving apparatus according to a non-limiting embodiment of the present invention;
Figure 6 is a flowchart illustrating an image transmitting method according to a non-limiting embodiment of the present invention; and
Figure 7 is a flowchart illustrating an image receiving method according to a non-limiting embodiment of the present invention.

The present invention will now be described more fully with reference to the accompanying drawings, in which exemplary, non-limiting embodiments of the invention are shown.

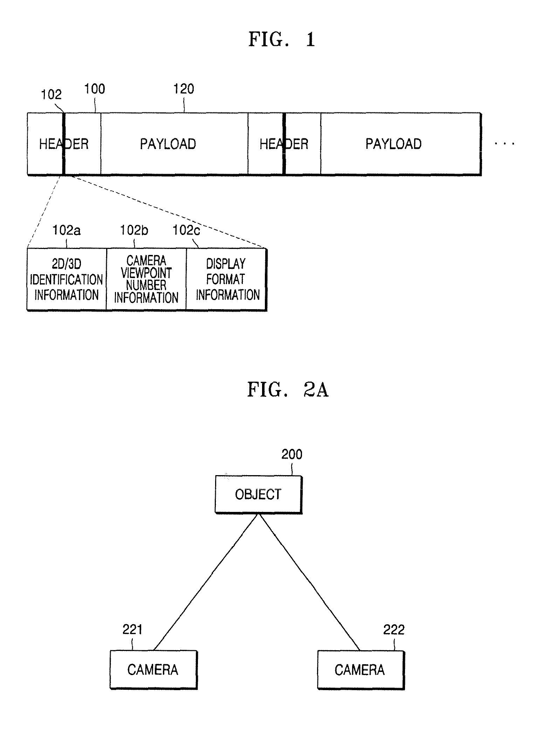

Figure 1 is a view of a transport stream structure according to a non-limiting embodiment of the present invention. Referring to Figure 1, the transport stream is composed of a header 100 and a payload 120.

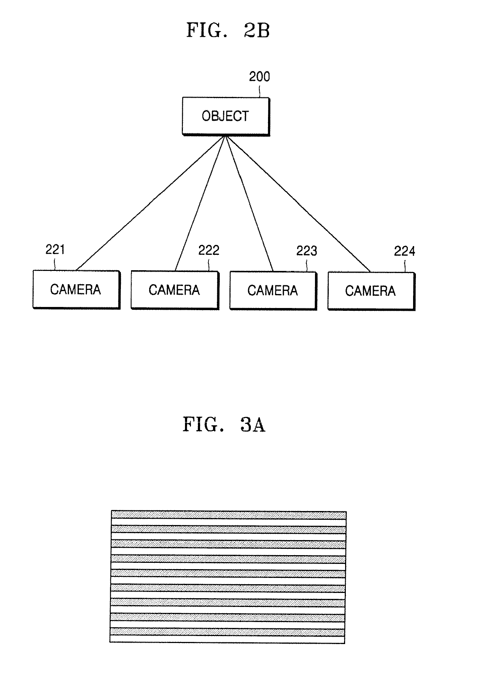

The header 100 of the transport stream includes control information for displaying an image included in the payload 120. An image characteristic parameter 102 representing the characteristic of image data stored in the payload 120 is included in a predetermined location of the transport stream header 100. The image characteristic parameter 102 includes 2D/3D identification information 102a indicating whether the image data stored in the payload 120 is a 2D image (for example, a general TV signal, a VCR signal, etc.) or a 3D image. If the image data stored in the payload 120 is a 3D image, the image characteristic parameter 102 can further include information 102b regarding the number of camera viewpoints for the 3D image. Here, the number of camera viewpoints for the 3D image indicates the number of different angles an object is picked up when the object is picked up by cameras and produced as images. The number of camera viewpoints for a 3D image will be described in more detail with reference to Figure 2.

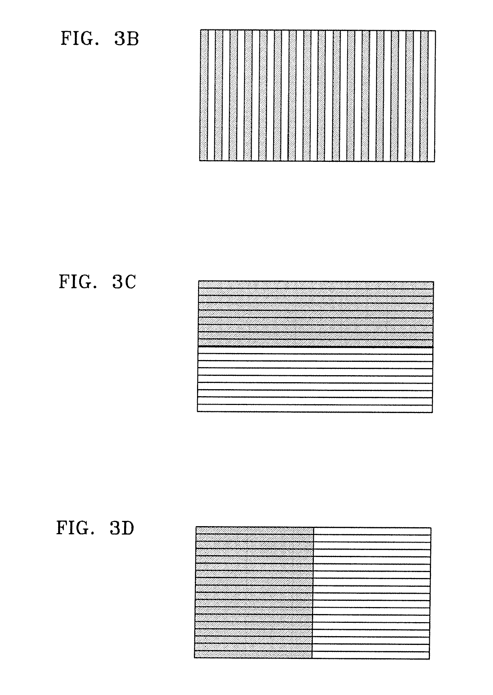

Also, if the image data stored in the payload 120 is a 3D image, the image characteristic parameter 102 can further include display format information 102c of the 3D image. Here, the display format information 102c indicates a format in which a single scene is displayed to form a 3D image. In more detail, display formats for a 3D image include a line-by-line format, a pixel-by-pixel format, a top-down format, a side-by-side format, etc. The information regarding display formats for a 3D image will be described in more detail with reference to Figure 3.

Figures 2A and 2B are views for explaining examples regarding the number of camera viewpoints for a three-dimensional (3D) image according to the current non-limiting embodiment of the present invention.

Referring to Figure 2A, an object 200 is picked up by two cameras 221 and 222 that are located in different positions. That is, the number of camera viewpoints for a 3D image is 2. Here, the object may be a stationary object or a moving object. Each of the two cameras 221 and 222 picks up a left-eye image and a right-eye image for the same object 200 separately.

Referring to Figure 2B, an object 200 is picked up by four cameras 221, 222, 223 and 224 that are located in different positions. That is, the number of camera viewpoints for a 3D image is 4.

In Figures 2A and 2B, the object may be a stationary object or a moving object.

In Figures 2A and 2B, the number of camera viewpoints for a 3D image are two and four, respectively, however, in the present invention, the number of camera viewpoints for a single object is not limited to these figures.

Figures 3A through 3D are views illustrating examples of display formats for a 3D image according to the current embodiment of the present invention. Referring to Figures 3A through 3D, Figure 3A illustrates an image based on a line-by-line format, Figure 3B shows an image based on a pixel-by-pixel format, Figure 3C illustrates an image based on a top-down format, and Figure 3D illustrates an image based on a side-by-side format.

In more detail, hereinafter, a display format for stereo images (left-eye image and right-eye image) will be described. Each of the left-eye and right-eye images has a size of NxM. The image based on the line-by-line format illustrated in Figure 3A is a 3D image obtained by 1/2 subsampling a left-eye image and a right-eye image respectively in a vertical direction so that pixels of the left-eye image and pixels of the right-eye image are alternately located on respective lines. The image based on the pixel-by-pixel format illustrated in Figure 3B is a 3D image obtained by 1/2 subsampling a left-eye image and a right-eye image respectively in a horizontal direction so that pixels of the left-eye image and pixels of the right-eye image are alternately located on respective lines. The image based on the top-down format illustrated in Figure 3C is a 3D image obtained by 1/2 subsampling a left-eye image and a right-eye image respectively in a vertical direction, locating the sampled left-eye image in a upper portion and locating the sampled right-eye image in a lower portion. That is, by respectively subsampling a left-eye image and a right-eye image each with a size of NxM into a size of NxM/2 and respectively locating the sample results in the upper portion and in the lower portion, a 3D image with a size of NxM is obtained. The image based on the side-by-side format illustrated in Figure 3D is a 3D image obtained by 1/2 subsampling a left-eye image and a right-eye image respectively in a horizontal direction, locating the sampled left-eye image in the left portion and locating the sampled right-eye image in a right portion. That is, by respectively subsampling a left-eye image and a right-eye image each with a size of NxM into a size of N/2xM and respectively locating the sample results in the left portion and in the right portion, a 3D image with a size of NxM is obtained.

Among the display formats for the 3D image as described above, the top-down format illustrated in Figure 3C and the side-by-side format illustrated in Figure 3D are mainly used because they are efficient when compressed, according to the MPEG standard, and transmitted.

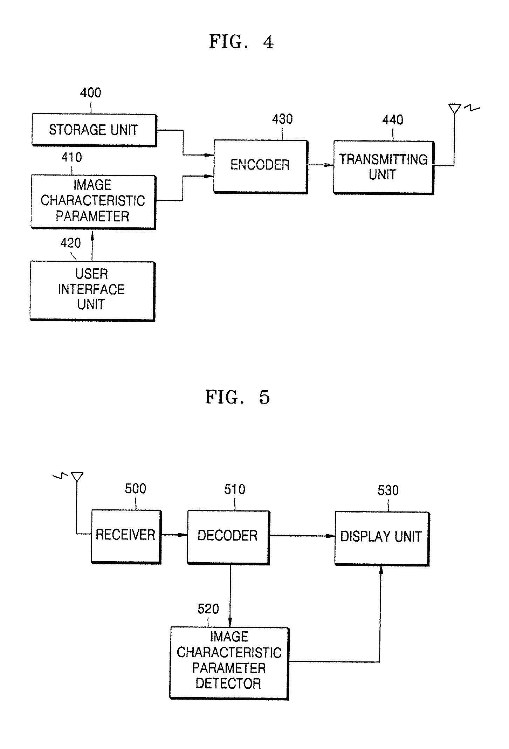

Figure 4 is a block diagram of an image transmitting apparatus according to a non-limiting embodiment of the present invention. Referring to Figure 4, the image transmitting apparatus includes a storage unit 400, an image characteristic parameter generator 410, a user interface unit 420, an encoder 430, and a transmitter 440. The storage unit 400 stores image data obtained by picking up an object. Image data which is stored in the storage unit 400 may be an image obtained by picking up an object using a single camera or images obtained by picking up an object using a plurality of cameras.

That is, image data stored in the storage unit 400 may be a 2D image, or a 3D image based on one of the display formats described above with reference to Figures 3A through 3D, which is obtained by subsampling and composing left-eye images and right-eye images picked up by a plurality of cameras.

The image characteristic parameter generator 410 creates an image characteristic parameter representing the characteristic of the image data stored in the storage unit 400. Here, the image characteristic parameter includes information indicating whether the image data represents a 2D image or a 3D image. If the image data represents a 3D image, the image characteristic parameter can further include camera viewpoint number information or display format information.

The user interface unit 420 receives a command for controlling the image characteristic parameter generator 410 from a user and provides an input/output interface for receiving the image characteristic parameter. The user can create an image characteristic parameter representing the characteristic of image data stored in the storage unit 400, through the user interface unit 420.

According to a non-limiting embodiment of the present invention, an image characteristic parameter is created using the user interface unit 420, however, various embodiments, such as creating an image characteristic parameter when an image is picked up, are possible.

The encoder 430 receives the image data obtained by picking up the object from the storage unit 400 and the image characteristic parameter created by the image characteristic parameter generator 410. Also, the encoder 430 encodes the image data received from the storage unit 400 and the image characteristic parameter received from the image characteristic parameter generator 410, and converts the received data into a transport stream format. Here, the encoder 430 performs encoding for including the image data received from the storage unit 400 in the payload of the transport stream and including the image characteristic parameter in a predetermined location of the header of the transport stream. Also, the encoder 430 performs the encoding using various methods, such as MPEG, etc. The transmitter 440 transmits the encoded transport stream according to a transmission standard, such as a digital broadcast standard, etc.

Figure 5 is a block diagram of an image receiving apparatus according to a non-limiting embodiment of the present invention. Referring to Figure 5, the image receiving apparatus includes a receiver 500, a decoder 510, an image characteristic parameter detector 520, and a display unit 530.

The receiver 500 receives an image signal from an image transmitting apparatus. Here, the image signal received through the receiver 500 is an image signal with a transport stream format.

The decoder 510 performs decoding according to an encoding standard used by the image transmitting apparatus. If the image signal has been encoded according to the MPEG-2 standard, the decoder 510 performs decoding according to the MPEG-2 standard. In more detail, the decoder 510 restores images signals encoded considering the temporal, spatial correlation of the image signals, into original images and original image characteristic parameters before being encoded, using a decoding technique, such as variable length decoding, inverse DCT, inverse quantization, movement compensation, etc.

The image characteristic parameter detector 520 detects the image characteristic parameter among information included in a predetermined location of the header of the decoded transport stream. Here, the image characteristic parameter includes information indicating whether image data included in the payload is a 2D image or a 3D image. Furthermore, if the image data represents a 3D image, the image characteristic parameter can further include camera viewpoint number information or display format information.

The display unit 530 receives the image characteristic parameter from the image characteristic parameter detector 520 and the image data decoded by the decoder 510. Also, the display unit 530 displays the image data decoded according to the image characteristic parameter on a screen.

In more detail, if the image characteristic parameter indicates a 2D image, the display unit 530 displays the decoded image data received from the decoder 510 in two dimensions on a screen. Also, if the image characteristic parameter indicates a 3D image, the display unit 530 displays the decoded image data received from the decoder 510 in three dimensions on the screen. Further, if the image characteristic parameter indicates a 3D image and further includes the camera viewpoint number information or display format information, the display unit 530 converts and displays the decoded image data into a predetermined format according to the camera viewpoint information or display format information.

Here, in the present invention, the display unit 530 may be a 2D/3D convertible display. The 2D/3D convertible display can be implemented using various methods. Specifically, the display unit 530 according to the present invention can include an image forming panel display, a lens unit, and a power supply for selectively supplying a voltage to the lens unit, as disclosed in Korean Patent Publication No. 10-0440956, entitled "2D/3D convertible display". Also, the display unit 530 can be implemented by a 2D/3D convertible display which includes a liquid crystal shutter behind a TFT-LCD and selectively displays a 2D image and a 3D image using the liquid crystal shutter. However, the above-described examples are only exemplary, and the display unit 530 according to the present invention is not limited to these.

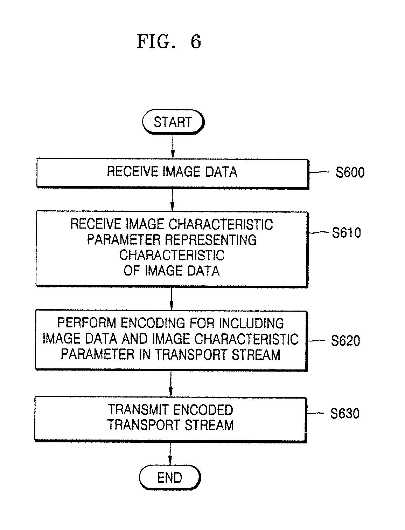

Figure 6 is a flowchart illustrating an image transmitting method according to an embodiment of the present invention. Referring to Figure 6, first, image data obtained by picking up an object is received (operation S600). Here, the image data is image data obtained by picking up an object using a single camera or a plurality of cameras.

Next, the image characteristic parameter representing the characteristic of the image data is received (operation S610). Here, the image characteristic parameter includes information indicating whether the image data received in operation S600 is a 2D image or a 3D image. If the image data is a 3D image, the image characteristic parameter can further include camera viewpoint number information or display format information.

Then, the image data received in operation S600 and the image characteristic parameter received in operation S610 are encoded and converted into a transport stream format (operation S620). Here, the image data is included in the payload of the transport stream and the image characteristic parameter is included in a predetermined location of the header of the transport stream. In operation S620, the encoding is performed using an encoding method, such as MPEG, etc.

Next, the transport stream encoded in operation S620 is transmitted according to a digital broadcast standard, etc. (operation S630).

The image transmitting method described with reference to Figure 6 will be understood in more detail by those skilled in the art with reference to Figure 4.

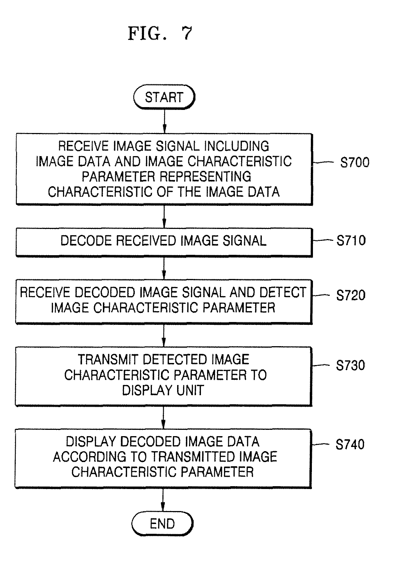

Figure 7 is a flowchart illustrating an image receiving method according to a non-limiting embodiment of the present invention. Referring to Figure 7, first, an image signal including image data and an image characteristic parameter regarding the image data are received through an antenna (operation S700). Here, the received image signal is an image signal with a transport stream format.

Next, the received image signal is decoded (operation S710). Then, the decoded image signal is received and the image characteristic parameter regarding the image data is detected (operation S720). Here, the image characteristic parameter includes information indicating whether the image data stored in the payload represents a 2D image or a 3D image. If the image data represents a 3D image, the image characteristic parameter can further include camera viewpoint number information and display format information.

Then, the image characteristic parameter detected in operation S720 is output to a display unit (operation S730) .

Thereafter, the image data decoded in operation S710 is displayed on a screen according to the image characteristic parameter transmitted in operation S730 (operation S740).

The image receiving method described above with reference to Figure 7 will be understood in more detail by those skilled in the art with reference to Figure 5.

The present invention can also be embodied as computer readable code on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves. The computer readable recording medium can also be distributed over network coupled computer systems so that the computer readable code is stored and executed in a distributed fashion.

As described above, according to the present invention, there are provided an image transmitting apparatus and method, an image receiving apparatus and method, and a transport stream structure thereof, which are capable of displaying 2D images and 3D images, in many fields requiring more enhanced image information. For example, in medical analysis fields, engineering fields, and simulation fields, etc., 3D images will be shown in future using DTV standard systems, etc.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A transport stream structure used for a digital broadcast system, comprising:
a header (100) comprising an image characteristic parameter (102), the image characteristic comprising information (102a) indicating whether image data used in the digital broadcast system represents a two-dimensional (2D) image or a three-dimensional (3D) image; and
a payload (120) comprising the image data.

2. The transport stream structure of claim 1, wherein, if the image data is a 3D image, the image characteristic parameter (102) further includes information (102b) regarding a number of camera viewpoints for the 3D image.

3. The transport stream structure of claim 1, wherein, if the image data is a 3D image, the image characteristic parameter (102) further includes information (102c) regarding a display format of the 3D image.

4. The transport stream structure of claim 3, wherein the display format of the 3D image is one of a line-by-line format, a pixel-by-pixel format, a top-down format, and a side-by-side format.

5. An image transmitting apparatus comprising:
a storage unit (400) which stores image data;
an image characteristic parameter generator (410) which creates an image characteristic parameter (102) indicating whether the image data represents a two-dimensional (2D) image or a three-dimensional (3D) image; and
an encoder (430) which receives the image data and the image characteristic parameter (102) and which encodes the image data and the image characteristic parameter (102) so that the image data and the image characteristic parameter (102) are included in a transport stream.

6. The image transmitting apparatus of claim 5, wherein the encoder (430) performs encoding for including the image data in a payload (120) of the transport stream and including the image characteristic parameter (102) in a header (100) of the transport stream.

7. The image transmitting apparatus of claim 5 or 6, wherein the encoder (430) further comprises a transmitting unit (440) which transmits the transport stream.

8. The image transmitting apparatus of claim 5, 6 or 7, further comprising a user interface unit (420) which receives a command, from a user, for controlling the image characteristic parameter generator (410), and provides an input/output interface for receiving the image characteristic parameter (102).

9. The image transmitting apparatus of any of claims 5 to 8, wherein, if the image data is a 3D image, the image characteristic parameter (102) further includes information (102b) regarding a number of camera viewpoints for the 3D image.

10. The image transmitting apparatus of any of claims 5 to 9, wherein, if the image data is a 3D image, the image characteristic parameter (102) further includes information (102c) regarding a display format of the 3D image.

11. The image transmitting apparatus of claim 10, wherein the display format of the 3D image is one of a line-by-line format, a pixel-by-pixel format, a top-down format, and a side-by-side format.

12. The image transmitting apparatus of any of claims 5 to 11, wherein the image data is data of a digital broadcast system.

13. An image receiving apparatus comprising:
a decoder (510) which receives and decodes an image signal comprising image data and an image characteristic parameter (102), the image characteristic parameter (102) comprising information indicating whether the image data represents a two-dimensional (2D) image or a three-dimensional (3D) image to generate a decoded image signal;
an image characteristic parameter detector (520) which receives the decoded image signal and detects the image characteristic parameter (102); and
a display unit (530) which displays the image data received from the decoder (510) according to the image characteristic parameter (102) received from the image characteristic parameter detector (520).

14. The image receiving apparatus of claim 13, further comprising:
a receiver (500) which receives the image signal with a transport stream format having a header (100) comprising the image characteristic parameter (102), and a payload (120) comprising the image data, and which outputs the image signal to the decoder (510).

15. The image receiving apparatus of claim 13 or 14, wherein the image characteristic parameter detector (520) detects the image characteristic parameter (102) in a header (100) of the decoded image signal.

16. The image receiving apparatus of claim 13, 14 or 15, wherein, if the image data is a 3D image, the image characteristic parameter (102) further comprises information (102b) regarding a number of camera viewpoints for the 3D image.

17. The image receiving apparatus of any of claims 13 to 16, wherein, if the image data is a 3D image, the image characteristic parameter (102) further comprises information (102c) regarding a display format of the 3D image.

18. The image receiving apparatus of claim 17, wherein the display format of the 3D image is one of a line-by-line format, a pixel-by-pixel format, a top-down format, and a side-by-side format.

19. The image receiving apparatus of any of claims 13 to 18, wherein the image data is data of a digital broadcast system.

20. A image transmitting method comprising:
(a) receiving image data;
(b) receiving an image characteristic parameter (102) comprising information indicating whether the image data represents a two-dimensional (2D) image or a three-dimensional (3D) image;
(c) encoding the image data and the image characteristic parameter (102) so that the image data and the image characteristic parameter (102) are included in a transport stream.

21. The image transmitting method of claim 20, wherein, in operation (c), the image data is included in a payload (120) of the transport stream and the image characteristic parameter (102) is included in a header (100) of the transport stream.

22. The image transmitting method of claim 20 or 21, wherein operation (c) further comprises transmitting the transport stream.

23. The image transmitting method of claim 20, 21 or 22, wherein, if the image data is a 3D image, the image characteristic parameter (102) further comprises information (102b) regarding a number of camera viewpoints for the 3D image.

24. The image transmitting method of any of claims 20 to 23, wherein, if the image data is a 3D image, the image characteristic parameter (102) further comprises information (102c) regarding a display format of the 3D image.

25. The image transmitting method of any of claims 20 to 24, wherein the image data is data of a digital broadcast system.

26. An image receiving method comprising:
(a) receiving and decoding an image signal comprising image data and an image characteristic parameter (102) comprising information indicating whether the image data represents a two-dimensional (2D) image or a three-dimensional (3D) image, to generate a decoded image signal;
(b) receiving the decoded image signal and detecting the image characteristic parameter (102);
(c) receiving the image characteristic parameter (102) detected in operation (b); and
(d) displaying the image data decoded in operation (a) according to the image characteristic parameter (102) received in operation (c).

27. The image receiving method of claim 26, further comprising before operation (a):
receiving the image signal with a transport stream format having a header (100) comprising the image characteristic parameter (102) representing a characteristic of the image data, and a payload (120) comprising the image data.

28. The image receiving method of claim 26 or 27, wherein operation (d) comprises:
(d1) receiving the image data decoded in operation (a) as input image data; and
(d2) displaying the input image data according to the image characteristic parameter (102) received in operation (c).

29. The image receiving method of any of claims 26 to 28, wherein, in operation (b), the image characteristic parameter (102) is detected by detecting information included in a header (100) of the decoded image signal.

30. The image receiving method of any of claims 26 to 29, wherein, if the image data is a 3D image, the image characteristic parameter (102) further comprises information (102b) regarding a number of camera viewpoints for the 3D image.

31. The image receiving method of any of claims 26 to 30, wherein, if the image data is a 3D image, the image characteristic parameter (102) further comprises information (102c) regarding a display format of the 3D image.

32. The image receiving method of any of claims 26 to 31, wherein the image data is data of a digital broadcast system.

33. A computer-readable medium having embodied thereon a computer program for executing the image transmitting method of any of claims 20 to 25.

34. A computer-readable medium having embodied thereon a computer program for executing the image receiving method of any of claims 26 to 32.
